# EUROPÄISCHE PATENTSCHRIFT

(11) **EP 1 614 918 B1**
(45) Veröffentlichungstag und Bekanntmachung des Hinweises auf die Patenterteilung: **23.01.2008**
(21) Anmeldenummer: 05013637.3
(22) Anmeldetag: 24.06.2005
(51) Int. Cl.: F16D 21/06, F16D 21/00

(54) **Vorrichtung zum Verbinden zweier Betätigungselemente mit zwei parallel zueinander bewegbaren Bauteilen, insbesondere Ein-/Ausrückbauteilen einer Doppelkupplung**
Device to connect two actuation elements with two parallel relatively moveable components, in particular engagement/release components of a dual clutch
Dispositif d'accouplement de deux éléments de commande avec deux pièces relativement mobiles, en particulier des pièces d'embrayage et de débrayage d'un embrayage double

(30) Priorität: 08.07.2004 DE 102004032987
(43) Veröffentlichungstag der Anmeldung: 11.01.2006
(73) Patentinhaber: LuK Lamellen und Kupplungsbau Beteiligungs KG, 77815 Bühl (DE)
(72) Erfinder: Ahnert, Gerd, 77880 Sasbach (DE)

(56) Entgegenhaltungen:
- DE-A1- 10 116 705
- DE-A1- 10 313 382

## Beschreibung

Die Erfindung betrifft eine Vorrichtung zum Verbinden zweier Betätigungselemente mit zwei parallel zueinander bewegbaren Bauteilen, insbesondere Ein-/Ausrückbauteilen einer Doppelkupplung.

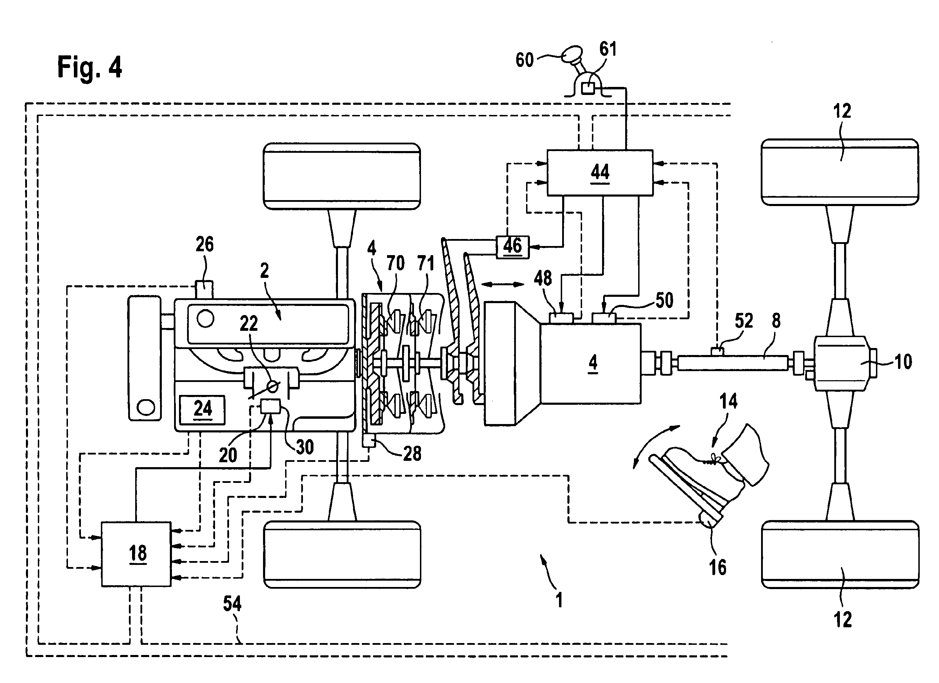

Anhand der Fig. 4 wird im Folgenden der Antriebsstrang eines mit einer Doppelkupplung und einem Parallelschaltgetriebe ausgerüsteten Fahrzeugs beschrieben, wie er beispielsweise aus der DE 101 16 705 A1 bekannt ist:
Ein insgesamt mit 1 bezeichnetes Kraftfahrzeug enthält einen Antriebsstrang mit einem Verbrennungsmotor 2, einer Doppelkupplung 4 und einem Parallelschaltgetriebe 6. Über eine Kardanwelle 8 und ein Differential 10 werden Räder 12 des Fahrzeugs 1 angetrieben, wobei das dargestellte Beispiel einen Hinterradantrieb aufweist.

Ein Motorsteuergerät 18 und ein Getriebesteuergerät 44 bilden eine Steuereinrichtung, die im dargestellten Beispiel baulich getrennt ausgeführt ist, wobei die beiden Steuergeräte über einen CAN-Bus 54 zum Datenaustausch verbunden sind. Die Steuergeräte können in unterschiedlicher Weise zu einer Steuereinrichtung zusammengefasst werden.

Kupplungen 70 und 71 der Doppelkupplung 4 sind mittels einer vom Getriebesteuergerät 44 angesteuerten Aktorik automatisiert unabhängig voneinander betätigbar.

Das Getriebesteuergerät 44 ist weiter mit einer Übersetzungswähleinrichtung 60 verbunden, die einen Wählhebel enthält, dessen Stellung von einem Sensor 61 erfasst wird.

Eine Einrichtung zum Ändern des Übersetzungsverhältnisses des Parallelschaltgetriebes 6 umfasst zumindest Getriebebetätigungseinrichtungen 48, 50 zur Betätigung einer Gruppe von Übersetzungsstufen, die jeweils einer der Kupplungen 70, 71 zugeordnet sind. Jeweils aufeinander folgende bzw. benachbarte Übersetzungsstufen sind unterschiedlichen Kupplungen 70, 71 zugeordnet, wobei die jeder Kupplung zugeordneten Übersetzungsstufen eine Übersetzungsstufengruppe bildet. Die Doppelkupplung 4 ermöglicht in Verbindung mit den Übersetzungsstufengruppen des Parallelschaltgetriebes 6 einen zugkraftunterbrechungsarmen oder-freien Wechsel zwischen einzelnen Übersetzungsstufen.

Das Steuergerät 44 empfängt Signale, die den Übertragungszustand der Kupplungen 70 und/oder 71 und die im Getriebe 6 eingestellten Übersetzungsverhältnisse darstellen, sowie Signale eines Sensors 52 für die Drehzahl der Kardanwelle 8 und des Sensors 61.

Das Motorsteuergerät 18 steuert den Verbrennungsmotor 2 über eine Verstellung eines Laststellgliedes 30. Dem Motorsteuergerät 18 werden Signale eines Saugrohrdrucksensors 24, eines Kühlwassersensors 26, eines Motordrehzahlsensors 28 sowie eines Laststellgliedsensors 20 und eines Sensors 16 zur Erfassung der Stellung eines Fahrpedals 14 zugeführt.

Die Getriebebetätigungseinrichtungen 48 und 50 enthalten beispielsweise je zwei Elektromotoren, von denen ein erster für einen Wählvorgang und ein zweiter für einen Schaltvorgang angesteuert wird.

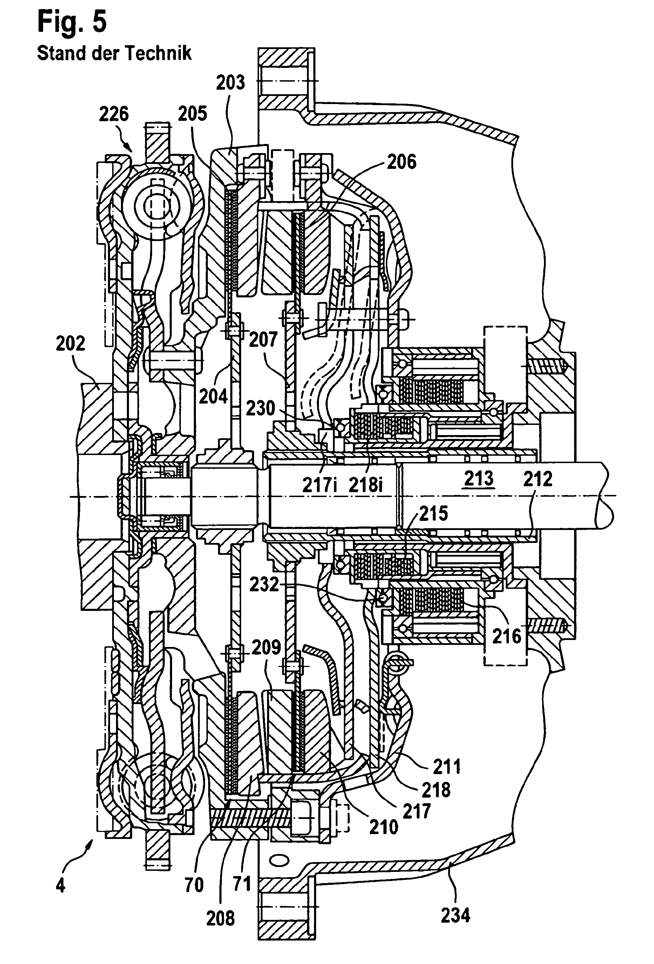

Ein Ausführungsbeispiel einer Doppelkupplung 4 ist in Fig. 5 genauer dargestellt, wobei nur die zur Erläuterung der später beschriebenen Erfindung zweckmäßigen Umfänge beschrieben werden.

Gemäß Fig. 5 weist die Doppelkupplung 4 die beiden Kupplungen 70 und 71 auf. Die Kupplung 70 enthält eine Kupplungsscheibe 204, die drehfest mit einer Getriebeeingangswelle 213 verbunden ist und antriebsmäßig mit einer Abtriebswelle 202 des Verbrennungsmotors verbindbar ist. Die Reibungskupplung 71 enthält eine Kupplungsscheibe 207, die mit einer Getriebeeingangswelle 212 drehfest verbunden ist und mit der Abtriebswelle 202 antriebsmäßig verbindbar ist.

Die Kupplungsscheibe 204 ist mit ihren Reibbelägen 205 axial zwischen einer Druckplatte 203 und einer Anpressplatte 208 angeordnet. Die Kupplungsscheibe 207 ist mit ihren Reibbelägen 206 axial zwischen einer Druckplatte 209 und einer Anpressplatte 210 angeordnet.

Die Druckplatten 203 und 209 sind axial - und drehfest mit der Abtriebswelle 202 des Motors verbunden. Die Anpressplatten 208 und 210 sind drehfest, jedoch axial über einen gewissen Bereich bewegbar mit einem Kupplungsdeckel 211, der ebenfalls mit der Abtriebswelle 202 des Motors verbunden ist, verbunden. Die Verbindung der Druckplatten 203, 209 mit der Abtriebswelle 202 erfolgt im dargestellten Beispiel über ein Trägheitsbauteil 226.

Die Betätigung der Kupplung 70 durch eine axiale Verlagerung der Anpressplatte 208 erfolgt mittels eines Antriebs 216, der über eine Tellerfeder 218 eine axiale Bewegung der Anpressplatte 208 bewirkt. Die Tellerfeder 218 beaufschlagt die Anpressplatte 208 im Sinne einer Einrückung, so dass die Kupplung 70 durch die Kraft des Antriebs 216 entgegen der Tellerfederkraft ausgerückt wird.

Die Betätigung der Kupplung 71 erfolgt mittels eines Antriebs 215, der auf eine Tellerfeder 217 auf die axial bewegliche Anpressplatte 210 wirkt. Auch hier ist die Anordnung der Tellerfeder derart, dass sie die Anpressplatte 210 in Richtung einer Einrückung der Kupplung beaufschlagt, so dass die Kupplung durch die Kraft des Antriebs ausgerückt wird.

Der Antrieb 215 wirkt mit dem inneren Bereich 217i der Tellerfeder 217 über ein Axialdrucklager 230 zusammen. Der Antrieb 216 wirkt mit der Tellerfeder 218 über ein an deren radial innerem Bereich 218i angeordnetes Axialdrucklager 232 zusammen.

Die beiden Kupplungen 70 und 71 einschließlich des Kupplungsdeckels 211 und des Trägheitsbauteils 226 werden an der rotierenden Abtriebswelle 202 montiert, wohingegen die Antriebe 215 und 216 an einer ortsfesten Kupplungsglocke 234 montiert werden.

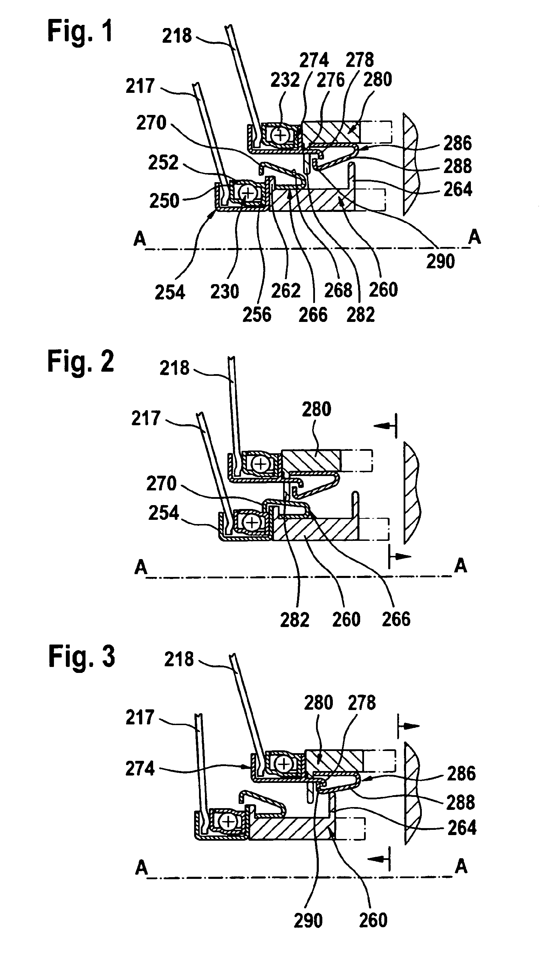

Bei der beschriebenen, an sich bekannten Ausführungsform müssen zur Betätigung der Kupplungen die radial inneren Bereiche 217i, 218i der Tellerfedern 217, 218 gemäß Fig. 3 zum Ausrücken der Kupplungen von den Antrieben 215, 216 nach links in die jeweils gestrichelte Stellung bewegt werden. Wenn die Antriebe nach rechts bewegt werden, rücken die Kupplungen durch Elastizität der Tellerfedern selbsttätig ein, wobei die entsprechenden Lagerschalen der Axialdrucklager 230, 232 selbsttätig in Anlage an nicht dargestellten Betätigungsteilen der Antriebe 215, 216 bleiben.

Die Kupplungen können entsprechend in einfacher Weise montiert werden, indem die Antriebe 215, 216 an der Kupplungsglocke 234 montiert werden und die Kupplungsglocke dann beispielsweise an einem Motorflansch (nicht dargestellt) befestigt wird, wobei die Antriebe bzw. deren Betätigungselemente in Anlage an die Lagerschalen der entsprechenden Axialdrucklager kommen.

Zum Nachbestellen der Kupplungen ist es erforderlich, dass die Tellerfedern von den Antrieben über die der voll eingerückten Kupplung entsprechenden Ruhestellung der Tellerfedern hinaus gemäß Fig. 5 nach rechts bewegt werden. Zu diesem Zweck ist es erforderlich, die jeweiligen Antriebe mit den inneren Bereichen der jeweiligen Tellerfedern derart zu verbinden, dass eine Bewegungsübertragung in beide axiale Richtungen möglich ist. Dies bedeutet wegen der erforderlichen in beiden Richtungen form- bzw. kraftlosen Verbindung einen zusätzlichen Aufwand bei der Montage und Demontage der Kupplung und der Antriebe bzw. der Aktorik. Des Weiteren ist es für bestimmte Anwendungsfälle nicht zweckmäßig, die Antriebe mit den jeweiligen Tellerfedern so zu verbinden, dass ständig eine Kraftübertragung in beiden Richtungen vorhanden ist. Ein Rückhub eines Antriebs über die voll eingerückte Stellung einer Kupplung hinaus könnte beispielsweise für einen Wegabgleich genutzt werden, wenn die Tellerfeder ab der voll eingerückten Stellung dem Rückhub eines Antriebs nicht folgt.

Der Erfindung liegt die Aufgabe zugrunde, eine Vorrichtung zu schaffen, mit der eine Doppelkupplung derart mit einer Aktorik verbunden werden kann, dass ein Kupplungselement, beispielsweise eine Tellerfeder, der Bewegung des Antriebs beispielsweise aus einer Ruhestellung heraus nur in eine Richtung ständig folgt und in der anderen Richtung nur bei Vorliegen vorbestimmter Bedingungen folgt.

Diese Aufgabe wird mit einer Vorrichtung zum Verbinden zweier Betätigungselemente mit zwei parallel zueinander bewegbaren Bauteilen, insbesondere Ein-/Ausrückbauteilen einer Doppelkupplung gelöst, wobei jedes der Betätigungselemente durch Bewegung in eine axiale Richtung in Anlage an das in einer Ruhestellung befindliche zugehörige Bauteil bringbar ist, jedes Bauteil durch weitere Bewegung des zugehörigen Betätigungselements in die eine axiale Richtung bewegbar ist und jeweils eines der Bauteile von dem zugehörigen Betätigungselement bei dessen Bewegung in eine andere axiale Richtung nur mitgenommen wird, wenn das jeweils andere Bauteil durch entsprechende Bewegung des zugehörigen Betätigungselements ausgehend von einer vorbestimmten Relativstellung der beiden Betätigungselemente in die eine axiale Richtung verschoben ist.

Die erfindungsgemäße Vorrichtung, die ganz allgemein zum Verbinden zweier Betätigungselemente mit zwei parallel zueinander linear bewegbaren Bauteilen eingesetzt werden kann, hat in ihrer Anwendung für eine Doppelkupplung den Vorteil, dass ein Rückhub eines Ein-/Ausrückbauteils über eine Ruhestellung der jeweiligen Kupplung hinaus nur erfolgen kann, wenn das jeweils andere Ein-/Ausrückbauteil in Richtung eines Vorwärts- bzw. Betätigungshubs betätigt ist.

Vorteilhafterweise weist jedes Betätigungselement ein Verschlussglied auf, welches bei einer Bewegung des jeweils anderen Betätigungselements in die eine axiale Richtung geschlossen wird, so dass das zugehörige Bauteil in beide axiale Richtungen formschlüssig mit dem zugehörigen Betätigungselement verbunden ist.

Bei einer bevorzugten Ausführungsform der erfindungsgemäßen Vorrichtung weist jedes Betätigungselement weiter eine Anlagefläche zur Anlage an einer entsprechenden Anlagefläche des zugehörigen Bauteils und einen Betätigungsansatz auf, der bei einer Relativbewegung zum jeweils anderen Betätigungselement in die eine Richtung das Verschlussglied derart betätigt, dass es in das zugehörige Bauteil eingreift, so dass eine formschlüssige Verbindung zwischen dem Bauteil und dem zugehörigen Betätigungselement in beide axiale Richtungen besteht.

Das Verschlussglied ist beispielsweise durch ein Federbauteil gebildet, das von dem Betätigungsansatz elastisch verformt wird.

Mit Vorteil ist das Federbauteil durch eine Blattfeder gebildet, die in verformtem Zustand einen Verriegelungsansatz des zugehörigen Bauteils hintergreift.

Wiederum in Anwendung für eine Doppelkupplung ist jedes der linear bewegbaren Bauteile ein Ein-/Ausrückbauteil einer von zwei Kupplungen einer Doppelkupplung und ist über je wenigstens ein Axialdrucklager drehbar und bezüglich beider axialer Richtungen formschlüssig mit einer Tellerfeder zum axialen Verschieben einer jeweiligen Druckplatte verbunden.

Bevorzugt ist die eine axiale Richtung die Ausrückrichtung der Kupplung.

Die Anordnung und Ausbildung der Ein-/Ausrückbauteile und Betätigungselemente ist vorteilhafterweise derart, dass jede der Kupplungen durch entsprechende Bewegung eines der Betätigungselemente aus einer Ruhestellung heraus in die eine axiale Richtung ausrückbar ist und jedes der Ein-/Ausrückbauteile aus der Ruhestellung heraus in die andere axiale Richtung mittels des zugehörigen Betätigungselements nur bewegbar ist, wenn das jeweils andere Betätigungselement in die eine axiale Richtung bewegt ist.

Bevorzugt sind die Betätigungselemente mit Antrieben zur Betätigung der jeweiligen Kupplung verbunden.

Die Erfindung wird im Folgenden anhand schematischer Zeichnungen beispielsweise und mit weiteren Einzelheiten erläutert.

In den Zeichnungen stellen dar:
- Fig. 1: einen Halbschnitt durch die radial inneren Bereiche zweier zu den Kupplungen eines Doppelkupplungsgetriebes gehörenden Tellerfedern und deren Verbindung mit von Antrieben antreibbaren Betätigungselementen,
- Fig. 2: die Anordnung gemäß Fig. 1 in einem von Fig. 1 verschiedenen Betriebszustand,
- Fig. 3: die Anordnung gemäß Fig. 1 in einem von Fig. 1 und Fig. 2 verschiedenen Betriebszustand,
- Fig. 4: einen bereits erläuterten Antriebsstrang eines Kraftfahrzeugs mit Doppelkupplungsgetriebe gemäß dem Stand der Technik, und
- Fig. 5: einen Längsschnitt durch eine Doppelkupplung gemäß dem Stand der Technik.

Gemäß Fig. 1 ist eine Tellerfeder 217 einer Doppelkupplung beispielsweise der Doppelkupplung 4 gemäß Fig. 5, in ihrem radial inneren Bereich in Anlage an einer Lagerschale 250 eines Axialdrucklagers 230 dessen andere Lagerschale 252 in einem im Querschnitt U-förmigen Ring aufgenommen ist, der das Axialdrucklager 230 und das radial innere Ende der Tellerfeder 217 insgesamt umgreift und ein Ein-/Ausrückbauteil 254 für die zugehörige Kupplung bildet. Ein gemäß Fig. 1 rechter Schenkel 256 des Bauteils 254 überragt die Lagerschale 252 etwas.

Die rechte Seite des Schenkels 256 bildet eine Anlagefläche, an der eine entsprechende Anlagefläche eines im Folgenden als Betätigungselement 260 bezeichneten Betätigungsrings anliegt, von dessen axialen Enden ein radial kurzer Ringflansch 262 und ein radial längerer Ringflansch 264 vorstehen. Das Betätigungselement 260 ist beispielsweise mittels eines Antriebs 215 (Fig. 5) in axialer Richtung beweglich.

Die strichpunktierte Linie A-A stellt die Drehachse der Wellen der Kupplung dar.

An der Außenseite des ringförmigen Betätigungselements 260 befindet sich ein ringförmiges Federbauteil 266, dessen Querschnitt vom Ringflansch 262 zunächst parallel zur Außenseite des Betätigungselements 260 verläuft, dann nach rückwärts zu einem Schenkel umgebogen ist, der eine Schrägfläche 268 bildet und in einem zur Lagerschale 252 zeigenden Rand 270 endet.

Die Tellerfeder 218 der anderen Kupplung ist in ähnlicher Weise zusammen mit deren Axialdrucklager 232 in einem Ein-/Ausrückbauteil 274 aufgenommen, das mit einem nach rechts vorstehenden axialen Ansatz 276 ausgebildet ist, der in einem radial einwärts vorstehenden Rand 278 endet. Das Bauteil 274 ist in Anlage an einem Betätigungselement 280, das an seinem gemäß Fig. 1 linken Endbereich einen radial einwärts gerichteten Randflansch 282 aufweist, der von dem Ansatz 276 durchragt wird. Der axiale Ansatz 276, der nicht geschlossen ringförmig ausgebildet ist, sondern einzelne Finger aufweist, durchragt in dem Randflansch 282 ausgebildete Öffnungen. Radial innen an dem Betätigungselement 280 ist ein dem Federbauteil 266 ähnliches Federbauteil 286 angeordnet, das einen eine Schrägfläche 288 bildenden Schenkel aufweist, der radial auswärts in einem Rand 290 endet, der im dargestellten Zustand zwischen dem Randflansch 282 und dem Rand 278 des axialen Ansatzes 276, jedoch radial innerhalb des Randes 278 angeordnet ist.

Das Betätigungselement 280 kann mittels eines Antriebs, beispielsweise des Antriebs 216 gemäß Fig. 5, in axialer Richtung nach rechts und nach links verschoben werden.

Die Stellung der Bauteile gemäß Fig. 1 entspricht der voll eingerückten Stellung beider Kupplungen, in der die radial inneren Endbereiche der Tellerfedern 217 und 218 in ihrer kraftlosen Ruhestellung sind. Wie aus Fig. 1 ersichtlich, können die Betätigungsbauteile 260 und 280, die über die zugehörigen Antriebe an der Kupplungsglocke 234 befestigt sind, beim Montieren der Kupplungsglocke gemäß Fig. 1 von rechts her in Anlage an die Ein-/Ausrückbauteile 254 bzw. 274 bewegt werden. Ebenso können die Betätigungselemente 260, 280 bei einer Demontage der Kupplungsglocke nach rechts weg bewegt werden.

Aus der Stellung gemäß Fig. 1 kann jede der Kupplungen betätigt werden, indem das zugehörige Betätigungselement 260 bzw. 280 aus der dargestellten Ruhestellung nach links bewegt wird. Wenn beispielsweise nur das Betätigungselement 260 zum Ausrücken der zugehörigen Kupplung nach links bewegt wird, gelangt der Ringflansch 264 zwar in Anlage an die Schrägfläche 288 des Federbauteils 286, so dass dessen Rand 290 den Rand 278 des Bauteils 274 hintergreift und das Bauteil 274 mit dem Betätigungselement 280 verriegelt. Dies führt jedoch zu keiner Betätigung der der Tellerfeder 218 zugeordneten Kupplung, da die bei der Verformung des Federbauteils 286 wirksame Kraft in Betätigungsrichtung des Betätigungselements 280 nicht für dessen Verschiebung ausreicht.

In ähnlicher Weise führt eine Betätigung des Betätigungselements 260 zum Ausrücken der der Tellerfeder 217 zugeordneten Kupplung, nicht jedoch zu einer Verschiebung des Betätigungselements 280. Aus der Stellung gemäß Fig. 1 heraus sind somit beide Kupplungen durch Bewegen der zugehörigen Betätigungselemente 260 bzw. 280 unabhängig voneinander ausrückbar und wieder einrückbar.

Fig. 2 zeigt den Zustand, bei dem das Betätigungselement 280 zumindest einen Teil seines Betätigungshubs (Bewegung nach links) ausgeführt hat, um die Tellerfeder 218 entsprechend zu verschwenken. Bei diesem Hub hat der Randflansch 282 das Federbauteil 266 derart verformt, dass dessen Rand 270 den Schenkel 256 hintergreift und das Ein-/Ausrückbauteil 254 mit dem Betätigungselement 260 verriegelt bzw. für eine Bewegung nach rechts formschlüssig verbindet. Somit kann die Tellerfeder 217 durch einen Rückhub des Betätigungselements 260 entgegen dessen normaler Betätigungsrichtung zum Ausrücken der zugehörigen Kupplung über die Ruhestellung hinaus nach rechts bewegt werden, wobei diese Bewegung nur möglich ist, wenn das Betätigungselement 280 einen Betätigungshub ausgeführt hat bzw. relativ zum Betätigungselement 260 in Betätigungsrichtung des Betätigungselements 280 verschoben ist. Das Federbauteil 266 hat die Funktion eines Verschlusselements, das in der Stellung gemäß Fig. 2 das Bauteil 254 mit dem Betätigungselement 260 verriegelt. Diese Verriegelung löst sich, wenn die Anordnung in den Ausgangszustand gemäß Fig. 1 zurück bewegt wird. Auf diese Weise ist es beispielsweise möglich, einen Verschleißausgleich der der Tellerfeder 217 zugeordneten Kupplung vorzunehmen, wenn diese Kupplung beispielsweise über einen Verschleißausgleichsmechanismus verfügt, der einen Rückhub der Tellerfeder 217 erfordert.

Fig. 3 zeigt den gegenüber Fig. 2 umgekehrten Fall, bei dem sich das Betätigungselement 280 in Ruhestellung befindet und das Betätigungselement 260 im Sinne eines Betätigungshubs nach links verschoben ist. Dabei gelangt der Ringflansch 264 in Anlage an die Schrägfläche 288 des Federbauteils 286, so dass dieses verformt wird und sein Rand 290 dem Rand 278 des Ein-/Ausrückbauteils 274 hintergreift, so dass dieses mit dem Betätigungselement 280 verriegelt ist und bei einer Rückhubbewegung des Betätigungselements 280, angetrieben durch den zugehörigen Antrieb, die Tellerfeder 218 in Gegenrichtung zur Ausrückrichtung der zugehörigen Kupplung mitnimmt. Das Federbauteil 286 hat somit ähnlich dem Federbauteil 266 die Funktion eines Verschlusselements.

Es versteht sich, dass die beschriebene Anordnung in vielfältiger Weise abgeändert werden kann, solange nur als Verschlusselemente wirksame Bauteile vorgesehen sind, die durch entsprechende Betätigung eines jeweils einer anderen Kupplung zugehörigen Betätigungselements in einen Funktionszustand gebracht werden, in dem sie die Verriegelung zweier Bauteile hervorrufen. Dabei muss die Betätigung des jeweiligen Verschlusselements nicht zwingend durch eine unmittelbare Anlage erfolgen; sie kann auch magnetisch herbeigeführt werden. Die Ein-/Ausrückbauteile und Betätigungselemente müssen nicht als Ringteile ausgebildet sein, sondern insbesondere die Betätigungselemente können beispielsweise als Ringelemente oder anders geeignet geformte Teile ausgebildet sein. Es versteht sich weiter, dass die beschriebene Anordnung auch für solche Kupplungen verwendbar ist, bei denen die Tellerfeder ein Ausrücken der Kupplung herbeiführt und die Kupplung durch die Kraft eines Antriebs eingerückt wird.

### Bezugszeichenliste

- 1: Kraftfahrzeug
- 2: Verbrennungsmotor
- 4: Doppelkupplung
- 6: Parallelschaltgetriebe
- 8: Kardanwelle
- 10: Differential
- 12: Rad
- 16: Sensor
- 18: Motorsteuergerät
- 20: Sensor
- 24: Sensor
- 26: Sensor
- 28: Sensor
- 30: Laststellglied
- 44: Getriebesteuergerät
- 46: Aktorik
- 48: Getriebebetätigungseinrichtung
- 50: Getriebebetätigungseinrichtung
- 52: Sensor
- 54: CAN-Bus
- 60: Wählhebel
- 61: Sensor
- 70: Kupplung
- 71: Kupplung
- 202: Abtriebswelle
- 203: Druckplatte
- 204: Kupplungsscheibe
- 205: Reibbelag
- 206: Reibbelag
- 207: Kupplungsscheibe
- 208: Anpressplatte
- 209: Druckplatte
- 210: Anpressplatte
- 211: Kupplungsdeckel
- 212: Getriebeeingangswelle
- 213: Getriebeeingangswelle
- 215: Antrieb
- 216: Antrieb
- 217: Tellerfeder
- 217i: innerer Bereich
- 218: Tellerfeder
- 218i: innerer Bereich
- 226: Trägheitsbauteil
- 230: Axialdrucklager
- 232: Axialdrucklager
- 234: Kupplungsglocke
- 250: Lagerschale
- 252: Lagerschale
- 254: Ein-/Ausrückbauteil
- 256: Schenkel
- 260: Betätigungselement
- 262: Ringflansch
- 264: Ringflansch
- 266: Federbauteil
- 268: Schrägfläche
- 270: Rand
- 274: Ein-/Ausrückbauteil
- 276: axialer Ansatz
- 278: Rand
- 280: Betätigungselement
- 282: Randflansch
- 286: Federbauteil
- 288: Schrägfläche
- 290: Rand

## Patentansprüche

1. Vorrichtung zum Verbinden zweier Betätigungselemente (260, 280) mit zwei parallel zueinander bewegbaren Bauteilen (254, 274), insbesondere Ein-/Ausrückbauteilen einer Doppelkupplung, wobei
jedes der Betätigungselemente (260, 280) durch Bewegung in eine axiale Richtung in Anlage an ein jeweils zugehöriges der Bauteile (254, 274) bringbar ist,
jedes Bauteil durch weitere Bewegung des zugehörigen Betätigungselements in die axiale Richtung bewegbar ist, **dadurch gekennzeichnet, dass**
jeweils eines der Bauteile von dem zugehörigen Betätigungselement bei dessen Bewegen in eine andere axiale Richtung nur mitgenommen wird, wenn das jeweils andere Betätigungselement, ausgehend von einer vorbestimmten Relativstellung der beiden Betätigungselemente, in die eine axiale Richtung verschoben ist.

2. Vorrichtung nach Anspruch 1, wobei jedes Betätigungselement (260, 280) ein Verschlussglied (266, 286) aufweist, welches bei einer Bewegung des jeweils anderen Betätigungselements in die eine axiale Richtung geschlossen wird, so dass das zugehörige Bauteil (254, 274) in beide axiale Richtungen formschlüssig mit dem zugehörigen Betätigungselement verbunden ist.

3. Vorrichtung nach. Anspruch 2, wobei jedes Betätigungselement (260, 274) eine Anlagefläche zur Anlage an einer entsprechenden Anlagefläche des zugehörigen Bauteils und einen Betätigungsansatz (264, 282) aufweist, der bei einer Relativbewegung zum jeweils anderen Betätigungselement in die eine Richtung das Verschlussglied (266, 286) derart betätigt, dass es in das zugehörige Bauteil (254, 274) eingreift, so dass eine formschlüssige Verbindung zwischen dem Bauteil und dem zugehörigen Betätigungselement in beide axiale Richtungen besteht.

4. Vorrichtung nach Anspruch 3, wobei das Verschlussglied durch ein Federbauteil (266, 286) gebildet ist, das von dem Betätigungsansatz (264, 282) elastisch verformt wird.

5. Vorrichtung nach Anspruch 4, wobei das Federbauteil (266, 286) durch eine Blattfeder gebildet ist, die in verformtem Zustand einen Verriegelungsansatz (256, 278) des zugehörigen Bauteils (254, 274) hintergreift.

6. Doppelkupplung (70, 71) mit einer Vorrichtung nach Anspruch 1 wobei jedes Bauteil ein Ein-/Ausrückbauteil (254, 274) einer von zwei Kupplungen der Doppelkupplung ist und über je wenigstens ein Axialdrucklager (230, 232) drehbar und bezüglich beider axialer Richtungen formschlüssig mit einer Tellerfeder (217, 218) zum axialen Verschieben einer jeweiligen Druckplatte verbunden ist.

7. Doppelkupplung (70, 71) nach Anspruch 6, wobei die eine axiale Richtung die Ausrückrichtung der Kupplung ist.

8. Doppelkupplung (70, 71) nach Anspruch 7, wobei die Anordnung und Ausbildung der Ein-/Ausrückbauteile (254, 274) und Betätigungselemente (260, 280) derart ist, dass jede der Kupplungen durch entsprechende Bewegung eines der Betätigungselemente aus einer Ruhestellung heraus in die eine axiale Richtung ausrückbar ist und jedes der Ein-/Ausrückbauteile aus der Ruhestellung heraus in die andere axiale Richtung mittels des zugehörigen Betätigungselements nur bewegbar ist, wenn das jeweils andere Betätigungselement in die eine axiale Richtung bewegt ist.

9. Doppelkupplung (70, 71) nach Anspruch 8, wobei die Betätigungselemente mit Antrieben zur Betätigung der jeweiligen Kupplung verbunden sind.

## Claims

1. Device for connecting two actuating elements (260, 280) having two components (254, 274) that are movable relative to each other, in particular engaging/disengaging components of a double clutch, wherein each of the actuating elements (260, 280) can be brought to bear against a respective corresponding one of the components (254, 274) by being moved in an axial direction, where each component is movable in the axial direction by additional movement of the corresponding actuating element in the axial direction, **characterized in that** one of the respective components is carried along by the corresponding actuating element as it moves in a different axial direction only if the respective other actuating element is moved in the one axial direction, starting from a predefined relative position of the two actuating elements.

2. Device according to Claim 1, wherein each actuating element (260, 280) has a coupling link (266, 286) which is closed when the respective other actuating element moves in the one axial direction, so that the corresponding component (254, 274) is positively connected to the corresponding actuating elements in both axial directions.

3. Device according to Claim 2, wherein each actuating element (260, 274) has a contact surface to bear against a corresponding contact surface of the corresponding component, and an actuating lug (264, 282) which, when there is a movement relative to the respective other actuating element in the one direction, operates the coupling link (266, 286) in such a way that it engages the corresponding component (254, 274), so that a positive connection exists between the component and the corresponding actuating element in both axial directions.

4. Device according to Claim 3, wherein the coupling link is formed by a spring component (266, 286) that is elastically deformed by the actuating lug (264, 282).

5. Device according to Claim 4, wherein the spring component (266, 286) is formed by a leaf spring which in the deformed state reaches behind and engages a latching lug (256, 278) of the corresponding component (254, 274).

6. Double clutch (70, 71) having a device according to Claim 1, wherein each component is an engaging/disengaging component (254, 274) of one of two clutches of the double clutch, and is rotatable through at least one axial thrust bearing (230, 232) and is positively connected with a diaphragm spring (217, 218) with respect to both axial directions, to move a respective pressure plate axially.

7. Double clutch (70, 71) according to Claim 6, wherein the one axial direction is the disengaging direction of the clutch.

8. Double clutch (70, 71) according to Claim 7, wherein the placement and design of the engaging/disengaging components (254, 274) and actuating elements (260, 280) is such that each of the clutches is releasable from a rest position into the one axial direction by appropriate motion of one of the actuating elements, and each of the engaging/disengaging components is movable from the rest position into the other axial direction by means of the corresponding actuating element only if the respective other actuating element is moved in the one axial direction.

9. Double clutch (70, 71) according to Claim 8, wherein the actuating elements are connected to drives to operate the respective clutch.

## Revendications

1. Dispositif pour la liaison de deux éléments d'actionnement (260, 280) avec deux composants (254, 274) pouvant se déplacer parallèlement l'un à l'autre, plus particulièrement des composants d'embrayage/de débrayage d'un embrayage double,
où chacun des éléments d'actionnement (260, 280) peut être amené en appui contre un des composants correspondants (254, 274) par un mouvement en direction axiale,
et chaque composant peut être déplacé en direction axiale par un mouvement supplémentaire de l'élément d'actionnement correspondant, **caractérisé par le fait que**
chacun des composants n'est entraîné par l'élément d'actionnement lors du mouvement de celui-ci dans l'autre sens de la direction axiale que lorsque l'autre élément d'actionnement, partant d'une position relative prédéfinie des deux éléments d'actionnement, est déplacé dans le premier sens de la direction axiale.

2. Dispositif selon la revendication 1, où chaque élément d'actionnement (260, 280) présente un élément de fermeture (266, 286) qui est fermé lors d'un mouvement de l'autre élément d'actionnement dans le premier sens de la direction axiale de sorte que le composant correspondant (254, 274) soit, dans les deux sens, engagé positivement avec l'élément d'actionnement correspondant.

3. Dispositif selon la revendication 2, où chaque élément d'actionnement (260, 280) présente une surface d'appui pour l'appui contre une surface d'appui correspondante de l'élément correspondant et un talon d'actionnement (264, 282) qui, lors d'un mouvement relatif par rapport à l'autre élément d'actionnement dans le premier sens, actionne l'élément de fermeture (266, 286) de façon à ce que celui-ci s'engage dans le composant correspondant (254, 274), de sorte qu'une liaison positive soit constituée entre le composant et l'élément d'actionnement correspondant dans les deux sens de la direction axiale.

4. Dispositif selon la revendication 3, où l'élément de fermeture est formé par un composant de ressort (266, 286), lequel est déformé de façon élastique par le talon d'actionnement (264, 282).

5. Dispositif selon la revendication 4, le composant de ressort (266, 286) étant constitué d'un ressort à lame qui, en état déformé, s'engage derrière un talon de verrouillage (256, 278) du composant correspondant (254, 274).

6. Embrayage double (70, 71) avec un dispositif selon la revendication 1, où chaque composant est un composant d'embrayage/de débrayage (254, 274) d'un des deux embrayages de l'embrayage double et est relié par l'intermédiaire d'au moins une butée axiale (230, 232) de façon rotative et de façon positive dans les deux sens à une rondelle-ressort (217, 218) pour le déplacement axial d'une plaque d'appui.

7. Embrayage double (70, 71) selon la revendication 6, où le premier sens de la direction axiale est le sens de débrayage de l'embrayage.

8. Embrayage double (70, 71) selon la revendication 7, où la disposition et la configuration des composants d'embrayage/de débrayage (254, 274) et des éléments d'actionnement (260, 280) est réalisée de sorte que chacun des embrayages peut, par un mouvement correspondant d'un des éléments d'actionnement, être débrayé dans le premier sens de la direction axiale à partir d'une position de repos et que chacun des composants d'embrayage/de débrayage ne peut être débrayé à l'aide de l'élément d'actionnement correspondant dans l'autre sens de la direction axiale à partir d'une position de repos qu'à condition que l'autre élément d'actionnement soit déplacé dans le premier sens de la direction axiale.

9. Embrayage double (70, 71) selon la revendication 8, les éléments d'actionnement étant reliés à des entraînements pour l'actionnement de l'embrayage correspondant.
